# FASCICULE DE BREVET EUROPEEN

(11) **EP 3 516 662 B1**
(45) Date de publication et mention de la délivrance du brevet: **28.10.2020**
(21) Numéro de dépôt: 17768479.2
(22) Date de dépôt: 22.09.2017
(51) Int. Cl.: G21C 19/07, G21C 19/30

(54) **SYSTÈME DE CIRCULATION D'UNE INSTALLATION NUCLÉAIRE, CENTRALE NUCLÉAIRE, SOUS-MARIN NUCLÉAIRE ET UTILISATION ASSOCIÉS**
KREISLAUFSYSTEM FÜR EIN KERNKRAFTWERK, ZUGEHÖRIGES KERNKRAFTWERK, ATOMUNTERSEEBOOT UND VERWENDUNG
CIRCULATION SYSTEM FOR A NUCLEAR FACILITY, ASSOCIATED NUCLEAR POWER PLANT, NUCLEAR SUBMARINE AND USE

(30) Priorité: 23.09.2016 FR 1658980
(43) Date de publication de la demande: 31.07.2019
(73) Titulaire: Société Technique pour l'Energie Atomique, 91190 Villiers Le Bacle (FR)
(72) Inventeur: COSTE, Olivier, 13090 Aix-en-Provence (FR); FREGOLENT, Fabrice, 91190 Gif sur Yvette (FR); STAMBOULI, Soufiane, 13090 Aix-en-Provence (FR); TURQUIN, Richard, 13105 Mimet (FR)
(74) Mandataire: Lavoix
(86) Numéro de dépôt international: PCT/EP2017/074078
(87) Numéro de publication internationale: WO 2018/055100

(56) Documents cités:
- CN-U- 203 338 773
- JP-A- 2007 007 757

## Description

La présente invention concerne, dans un premier temps, un système de circulation d'un liquide d'une installation nucléaire comprenant un volume, le volume comportant au moins un filtre divisant le volume en une zone de collecte et une zone d'alimentation, et une entrée agencée de telle sorte qu'un liquide chargé en fibres et particules s'accumule dans la zone de collecte, un organe de circulation ayant une aspiration connectée fluidiquement à la zone d'alimentation, et un circuit de circulation du liquide alimenté par l'organe de circulation, et permettant la recirculation d'un flux de liquide s'accumulant dans la zone de collecte.

Un tel système de circulation est par exemple utilisé dans un réacteur nucléaire en situation accidentelle. Le liquide chargé en fibres et particules, ici de l'eau issue d'une brèche dans une cuve, s'accumule au fond de l'enceinte, et est réinjecté vers la cuve et/ou un générateur de vapeur par le système de recirculation qui est alors qualifié de système d'injection de sécurité basse pression. L'eau chargée en fibres et en particules est filtrée par des filtres métalliques plans. Un phénomène particulier appelé « effet de peau mince » peut conduire à une augmentation significative des pertes de charge dans ces filtres qui peuvent entraîner le colmatage du filtre et la perte de la fonction du système d'injection de sécurité basse pression.

L'effet de peau mince se caractérise de manière conventionnelle en ce qu'un lit dit homogène de fibres correspondant à une faible épaisseur de fibres réparties uniformément sur toute la surface de filtration d'un filtre plan, associé à une faible quantité de particules conduit à un accroissement très important de la perte de charge. Les lits homogènes de fibres, sans particule, ne conduisent pas à un tel phénomène. Ainsi, pour une épaisseur de lit donnée, les pertes de charge augmentent avec le rapport massique particules/fibres. Plus le lit de fibres de débit fibreux est mince, plus l'influence des particules sur la perte de charge est prépondérante.

Le dimensionnement des surfaces de filtration doit tenir compte de ce phénomène afin que les pertes de charge restent acceptables tout au long du fonctionnement du système.

Plusieurs solutions peuvent être envisageables pour limiter le risque d'effet de peau mince.

Une solution consiste en la mise en place et le dimensionnement de grandes surfaces de filtration. Néanmoins, l'augmentation de ces surfaces implique des contraintes supplémentaires pour l'aménagement, et un coût lié au développement de filtres spécifiques.

Une autre solution contre l'effet de peau mince consiste en la mise en place d'un décolmatage du filtre en injectant un fluide de l'intérieur du filtre vers l'extérieur. Cette solution permet de nettoyer le filtre mais elle demande l'intervention d'un opérateur ou la mise en oeuvre d'un automatisme ; et implique surtout l'arrêt du système, ce qui est n'est pas envisageable lorsque le système réalise une fonction de sûreté comme dans le cas du système d'injection de sécurité.

Une autre solution comprenant le nettoyage du filtre est connue du document JP 2007 007757 A.

La faisabilité de ces différentes solutions est plus ou moins complexe à mettre en oeuvre en fonction de l'état de la chaufferie. Par ailleurs, la démonstration du bien-fondé du dimensionnement repose d'une part sur une analyse pouvant être discutée par les autorités de sûreté, et nécessite d'autre part des essais qui présentent un coût non négligeable.

Dans ce contexte, l'invention vise à proposer un système de circulation d'une installation nucléaire apte à prévenir l'apparition de l'effet de peau mince.

A cette fin l'invention porte sur un système de circulation selon la revendication 1.

Le système de circulation peut en outre présenter une ou plusieurs des caractéristiques ci-dessous, considérées individuellement ou selon toutes les combinaisons techniquement possibles :
- le circuit de circulation comporte une ligne de recirculation du liquide filtré reliée à chaque organe d'injection, le liquide filtré étant le fluide de prévention de l'effet de peau mince ;
- le système comprend un second organe de circulation destiné à faire circuler le fluide de prévention de l'effet de peau mince jusqu'à chaque organe d'injection ;
- chaque organe d'injection comprend une extrémité placée à une distance comprise entre 1 cm et 10 cm du côté du filtre tourné vers la zone de collecte ;
- chaque organe d'injection est configuré pour injecter le fluide de prévention suivant un axe d'injection, l'angle formé entre le côté du filtre tourné vers la zone de collecte et l'axe d'injection étant compris entre 0 et 45°, de préférence entre 5 et 20° ;
- le fluide de prévention de l'effet de peau mince est injecté à un débit compris entre 10% et 30% du débit nominal de l'organe de circulation ;
- chaque organe d'injection débouche sur le tiers supérieur verticalement du côté du filtre tourné vers la zone de collecte ;
- l'aspiration de l'organe de circulation est raccordé fluidiquement à un piquage débouchant dans la zone d'alimentation, chaque organe d'injection injectant un fluide de prévention de l'effet de peau mince sur une zone limitée du côté du filtre tourné vers la zone de collecte, la zone limitée correspondant à une surface comprise entre 1 et 10 fois la section de passage du piquage ; et
- l'installation nucléaire est un réacteur nucléaire comportant une enceinte de confinement délimitée par un fond, une cuve logée dans l'enceinte, et un cœur disposé dans la cuve comportant des assemblages de combustible nucléaire, le volume étant situé en fond de l'enceinte, l'organe de circulation étant en communication fluidique avec la cuve, le circuit de circulation du liquide étant agencé pour permettre la circulation d'un flux de liquide s'accumulant dans la zone de collecte jusqu'à la cuve.

L'invention concerne aussi un ensemble d'un liquide chargé en fibres et particules et du système de circulation du liquide tel que décrit précédemment.

L'invention concerne dans un deuxième temps une centrale nucléaire comprenant un réacteur nucléaire comportant une enceinte de confinement délimitée par un fond, une cuve logée dans l'enceinte, un cœur disposé dans la cuve et comportant des assemblages de combustible nucléaire, et un système de circulation tel que décrit précédemment.

L'invention concerne dans un troisième temps une plateforme navale nucléaire comprenant un réacteur nucléaire comportant une enceinte de confinement délimitée par un fond, une cuve logée dans l'enceinte, un cœur disposé dans la cuve et comportant des assemblages de combustible nucléaire, et un système de circulation tel que décrit précédemment.

L'invention concerne, dans un quatrième temps, dans un système de circulation décrit plus haut, l'utilisation d'un organe d'injection injectant un fluide de prévention de l'effet de peau mince sur au moins une partie du côté du filtre tourné vers la zone de collecte pour prévenir l'apparition du phénomène de l'effet de peau mince.

L'invention concerne enfin un procédé de prévention de formation d'effet de peau mince sur un filtre d'un système de circulation selon la revendication 12.

Le procédé selon l'invention peut en outre présenter une ou plusieurs des caractéristiques ci-dessous, considérées individuellement ou selon toutes les combinaisons techniquement possibles :
- le procédé comprend une étape d'actionnement de l'organe de circulation du système de circulation, l'étape d'injection du fluide de prévention de l'effet de peau mince étant menée en continue pendant la durée d'actionnement de l'organe de circulation, avantageusement pendant toute la durée d'actionnement de l'organe de circulation et ;
- l'étape d'injection du fluide de prévention de l'effet de peau mince est menée à partir de ou avant l'étape d'actionnement de l'organe de circulation.

D'autres caractéristiques et avantages de l'invention ressortiront de la description détaillée qui est donnée ci-dessous, à titre indicatif et nullement limitatif, en référence aux figures annexées, parmi lesquelles :
- la figure 1 est une représentation schématique simplifiée d'un réacteur nucléaire comportant un système de circulation selon l'invention ;
- la figure 2 est une représentation schématique en coupe d'un système de circulation selon l'invention, et ;
- la figure 3 est un organigramme d'un procédé de prévention de formation de l'effet de peau mince selon l'invention.

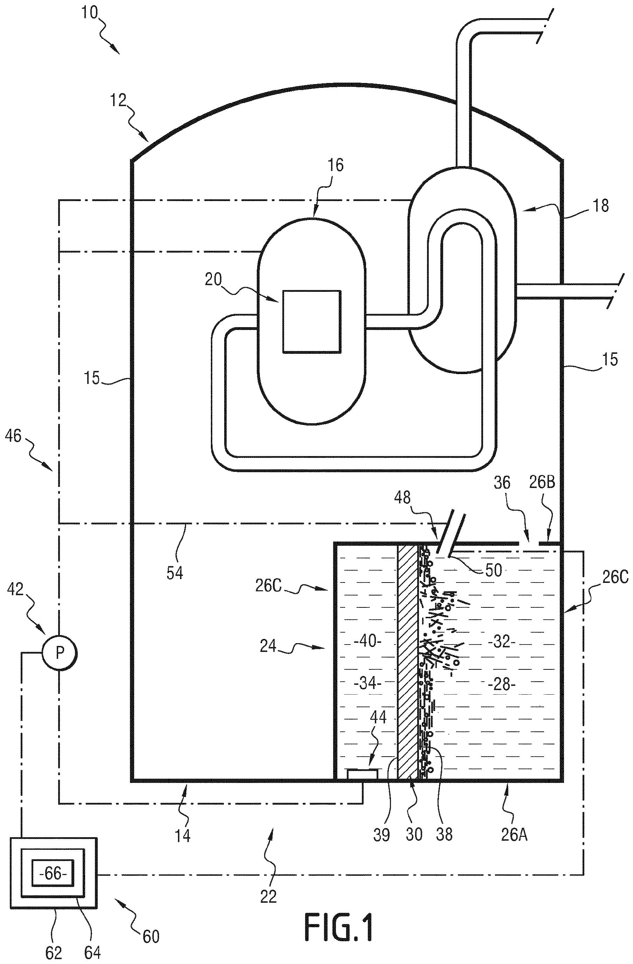

Un réacteur nucléaire 10 est illustré sur la figure 1. Le réacteur nucléaire 10 est de type PWR, BWR, ou de tout autre type.

Dans le mode de réalisation des figures, le réacteur est de type PWR et comprend une enceinte de confinement 12 délimitée par un fond d'enceinte 14 et des parois latérales 15, une cuve 16 logée dans l'enceinte 12, un générateur de vapeur 18, et un cœur 20 disposé dans la cuve 16.

Le réacteur comporte ainsi un circuit primaire de circulation d'un fluide du cœur 20 au générateur de vapeur 18 et un circuit secondaire de circulation d'un fluide du générateur de vapeur 18 à une turbine.

Le cœur 20 comporte des assemblages de combustibles nucléaires, qui ne sont pas représentés.

Le réacteur nucléaire 10 comporte aussi un système de circulation 22 qui est, dans le mode de réalisation des figures, un système d'injection de sécurité dédié à la recirculation de l'eau en fond d'enceinte 14.

Le système de circulation 22 dédié à la recirculation d'un liquide en fond d'enceinte 14 comprend un volume 24 disposé au fond 14 de l'enceinte 12. Le volume 24 est délimité par des parois inférieures 26A, supérieures 26B et latérales 26C.

Le volume 24 est propre à collecter un liquide 28 s'accumulant en fond d'enceinte 14. Un tel liquide 28 est par exemple le liquide circulant dans le circuit primaire et/ou le circuit secondaire et provient ainsi par exemple d'une brèche sur ces circuits ou un de ces circuits.

Le liquide 28 en fond d'enceinte 14 est chargé en débris, tels que des fibres et des particules. Les fibres ont par exemple des dimensions comprises entre 500 µm et 2000 µm, et les particules ont par exemple des dimensions comprises entre 1 µm et 50 µm. Typiquement, les fibres présentent des longueurs comprises entre 500 µm et 2000 µm et des diamètres compris entre 5 µm et 15 µm.

Le système de circulation 22 comprend au moins un filtre 30. Le filtre 30 est par exemple un filtre plan s'étendant verticalement.

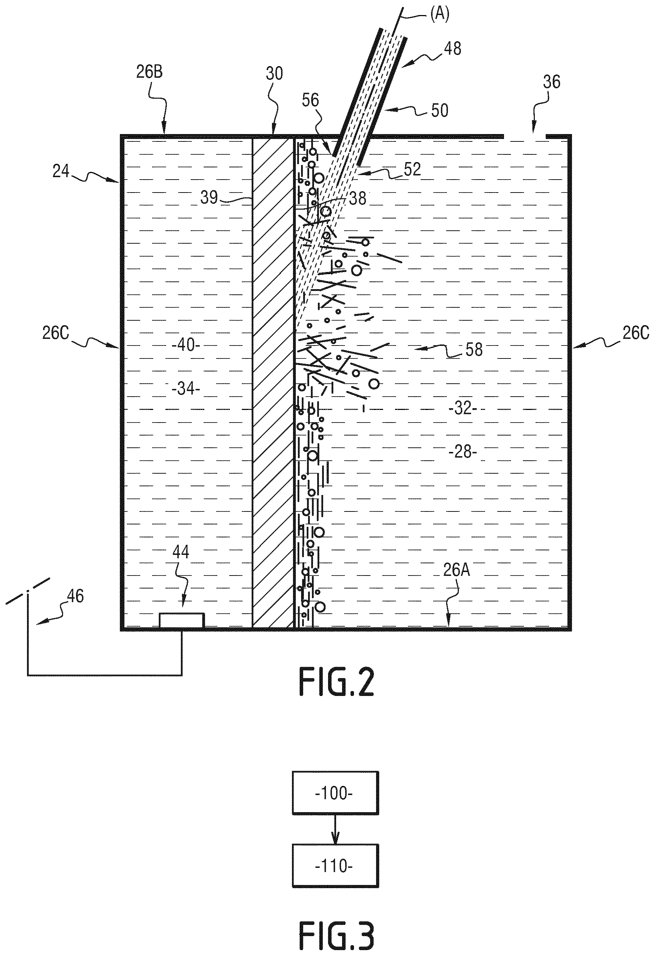

Dans le mode de réalisation des figures, le système de circulation ne comporte qu'un seul filtre 30. Le filtre 30 divise le volume 24 en une zone de collecte 32 et une zone d'alimentation 34 visibles toutes deux sur les figures 1 et 2. Le liquide 28 chargé en fibres et particules s'accumule alors dans la zone de collecte 32 au travers d'une entrée 36 aménagée dans la paroi supérieure 26B du volume 24. Sur les figures 1 et 2, les fibres ont été représentées par des bâtonnets de tailles variables, et les particules ont été représentées par des ronds de rayons variables.

Le filtre 30 comporte ainsi un côté 38 tourné vers la zone de collecte 32 et un côté 39 tourné vers la zone d'alimentation 34, qui s'étendent suivant un plan sensiblement vertical.

Le filtre 30 est apte à filtrer le liquide 28 chargé en fibres et particules, de sorte à obtenir dans la zone d'alimentation 34 un liquide filtré 40 qui n'est sensiblement pas chargé en fibres et particules. Le liquide filtré 40 comprend par exemple une concentration en particules et une concentration en fibres inférieures à 10% des concentrations en fibres et particules du liquide 28. Les fibres et particules du liquide 28 s'accumulent ainsi dans la zone de collecte 32, au voisinage du côté 38 du filtre 30 tourné vers la zone de collecte 32.

Le système de circulation 22 comprend aussi un organe de circulation 42 ayant une aspiration connectée fluidiquement à la zone d'alimentation 34. Cette aspiration est raccordée fluidiquement à un piquage 44, ayant une extrémité débouchant dans la zone d'alimentation 34. L'organe de circulation 42 est par exemple une pompe.

Le système de circulation 22 comprend aussi un circuit 46 de circulation alimenté par l'organe de circulation 42. Le circuit 46 de circulation est en communication fluidique avec la cuve 16 et/ou le générateur de vapeur 18 et permet la circulation du liquide 28 s'accumulant dans la zone de collecte 32 jusqu'à la cuve 16 et/ou le générateur de vapeur 18.

Dans le filtre, un phénomène dit d'effet de peau mince peut conduire à une augmentation des pertes de charge au niveau du côté 38 du filtre 30, ce qui peut entraîner le dysfonctionnement du système de circulation 22.

Le phénomène d'effet de peau mince se produit lorsqu'une peau mince homogène de fibres et de particules se forme au niveau d'un côté du filtre. Plus précisément, une peau mince homogène de fibres et de particules correspond à un lit de fibres et de particules, les fibres étant réparties uniformément sur un côté du filtre 30, sensiblement au repos et délimitant des interstices de passage du liquide 28, les particules s'accumulant dans les interstices. De par leurs faibles dimensions, les particules sont en effet aptes à s'insérer dans les interstices et à bloquer le passage du liquide 28, ce qui entraine alors des pertes de charge importantes.

Le système de circulation 22 comprend un système 48 de prévention de la formation d'une peau mince homogène de fibres et de particules au niveau du filtre 30, et plus précisément suivant le côté 38 du filtre 30 tourné vers la zone de collecte 32.

Par « prévention de la formation d'une peau mince », on entend que le système 48 de prévention de la formation d'une peau mince est propre à empêcher l'apparition d'une peau mince sur au moins une région du côté 38 du filtre 30 tourné vers la zone de collecte 32.

Sur ladite région, le côté 38 du filtre 30 tourné vers la zone de collecte 32 est dépourvu de lit de fibres et de particules au repos dans lequel les particules s'accumulent dans des interstices délimitées par les fibres.

En particulier, le système 48 de prévention est propre à agiter les fibres et les particules et maintenir une agitation des fibres et des particules dans au moins une région du côté 38 du filtre 30 tourné vers la zone de collecte 32.

En d'autres termes, le système 48 de prévention se distingue d'un système qui laisserait apparaitre une peau mince sur le filtre 38 pour ensuite la retirer. En effet, un système qui laisserait apparaitre une peau mince sur le filtre 38 pour ensuite la retirer pourrait nécessiter l'interruption de la circulation du liquide 28 dans le circuit 46 de circulation.

Le système 48 de prévention comprend au moins un organe d'injection 50 apte à injecter un fluide 52 de prévention de l'effet de peau mince sur au moins une partie du côté 38 du filtre 30 tourné vers la zone de collecte 32, c'est-à-dire le côté du filtre sur lequel s'accumulent les fibres et les particules.

Dans le mode de réalisation des figures, le système 48 de prévention ne comprend qu'un seul organe d'injection 50 mais en variante, le système 48 de prévention comprend plusieurs organes d'injection 50.

Le fluide 52 de prévention de l'effet de peau mince est injecté à un débit compris entre 5% et 30% du débit nominal présenté par l'organe de circulation 42, à répartir entre les organes d'injection 50.

Avantageusement, chaque organe d'injection 50 est distinct de l'entrée 36.

Dans un mode de réalisation privilégiée décrit sur la figure 1, le circuit 46 de circulation comporte une ligne de recirculation 54 du liquide filtré 40 reliée à chaque organe d'injection 50. Le liquide filtré 40 est alors le fluide 52 de prévention de l'effet de peau mince. L'organe de circulation 42 est alors apte à faire circuler une partie du liquide filtré 40 jusqu'à chaque organe d'injection 50 depuis la zone d'alimentation 34.

Chaque organe d'injection 50 est configuré pour injecter le fluide 52 de prévention de l'effet de peau mince suivant un axe d'injection (A). Chaque organe d'injection 50 débouche dans la zone de collecte 32, par exemple au travers de la paroi supérieure 26B du volume 24. Avantageusement, chaque organe d'injection 50 débouche sur la portion du côté 38 où l'épaisseur du lit de fibres et de particules est probablement la plus faible, par exemple chaque organe d'injection 50 débouche sur le tiers verticalement supérieur du côté 38 du filtre 30 tourné vers la zone de collecte 32.

Chaque organe d'injection 50 comprend une extrémité 56, équipée par exemple d'une buse, par laquelle débouche le fluide 52 de prévention de l'effet de peau mince. Cette extrémité 56 est placée proche du côté 38, par exemple à une distance comprise entre 1 cm et 10 cm du côté 38 du filtre 30.

L'angle formé entre le côté 38 du filtre 30 et l'axe d'injection (A) est par exemple compris entre 0 et 45°. Avantageusement, cet angle est compris entre 5 et 20°.

Le fluide 52 de prévention perturbe la formation d'une peau mince homogène de fibres et de particules sur une partie ou sur l'ensemble du côté 38 du filtre 30.

Dans le mode de réalisation de la figure 2, chaque organe d'injection 50 injecte un fluide 52 de prévention sur une zone 58 limitée du côté 38 du filtre 30. La zone limitée correspond, par exemple, à une surface comprise entre 1 et 10 fois la section de passage du piquage 44.

Ainsi, le côté 38 du filtre 30 comporte une zone 58, visible sur la figure 2, sur laquelle est dirigé le fluide 52 de prévention de l'effet de peau mince. Au niveau de cette zone 58, le fluide 52 de prévention de l'effet de peau mince empêche la formation d'une peau homogène de fibres et de particules. En effet, les fibres n'y sont plus réparties uniformément et s'accumulent, avec les particules, sous la forme d'un lit hétérogène de fibres et de particules, formant typiquement un amas poreux, ce qui empêche l'apparition du phénomène de l'effet de peau mince.

Dans un mode de réalisation avantageux, le système de circulation 22 comporte enfin un organe de pilotage 60 du système de circulation 22. Cet organe de pilotage 60 comprend une unité de traitement 62 reliée à chaque organe d'injection 50 et à l'organe de circulation 42, et une mémoire 64 comportant un programme 66 apte à commander l'organe de circulation 42 et chaque organe d'injection 50. En particulier, l'organe de pilotage 60 est par exemple apte à commander l'actionnement, l'arrêt et le débit de l'organe de circulation 42 et de chaque organe d'injection 50.

Par exemple, l'organe de pilotage 60 comporte aussi des capteurs non représentés aptes à mesurer la présence de liquide dans la zone d'alimentation 34. Ces capteurs sont reliés à l'unité de traitement 62.

Le système de circulation 22 est donc apte à être activé automatiquement à la suite de la détection de liquide dans la zone d'alimentation 34 par les capteurs. En variante, le système de circulation 22 est apte à être activé manuellement par un opérateur, par exemple à la suite de la détection de liquide dans la zone d'alimentation 34, le système comprenant alors un dispositif d'information de l'opérateur des mesures des capteurs et une interface d'activation du système par un opérateur.

L'organe de pilotage 60 est programmé pour piloter chaque organe d'injection 50 afin de réaliser l'injection du fluide 52 de prévention de l'effet de peau mince en continu pendant toute la durée au cours de laquelle l'organe de circulation 42 est actionné.

Par exemple, chaque organe d'injection 50 comprend une vanne (non représentée) mobile entre une position de passage du fluide 52 de prévention de l'effet de peau mince et une position de fermeture du passage du fluide 52 de prévention. L'organe de pilotage 60 est alors programmé pour piloter la position de la vanne, afin de contrôler l'injection du fluide 52 de prévention de l'effet de peau mince.

L'organe de pilotage 60 est aussi programmé pour actionner chaque organe d'injection 50 à partir de l'actionnement de l'organe de circulation 42. En variante, l'organe de pilotage 60 est programmé pour actionner chaque organe d'injection 50 avant l'actionnement de l'organe de circulation 42.

En référence avec la figure 3, un procédé de prévention de formation d'une peau mince sur un filtre d'un système de circulation va maintenant être décrit.

Le procédé est prévu pour être mis en œuvre par le système de circulation décrit plus haut. Inversement, le système de circulation est adapté pour la mise en œuvre du procédé.

Lorsqu'un accident conduit à l'accumulation d'un liquide 28 en fond 14 d'enceinte 12, par exemple en cas de brèche dans la cuve 16 et/ou le générateur de vapeur 18, les capteurs de l'organe de pilotage 60 détecte la présence de liquide et le système de circulation 22 est activé.

Le procédé comporte alors une étape 100 d'injection du fluide 52 de prévention de l'effet de peau mince sur au moins une partie du côté 38 du filtre 30. Au cours de cette étape 100 d'injection du fluide 52 de prévention de l'effet de peau mince, l'organe de pilotage 60 commande l'actionnement de chaque organe d'injection 50, et un fluide 52 de prévention de l'effet de peau mince est injecté sur tout ou partie du côté 38 du filtre 30.

Le procédé comporte aussi une étape 110 d'actionnement de l'organe de circulation 42 du système de circulation 22 pour faire circuler le liquide 28 s'accumulant dans la zone de collecte 32 dans le circuit 46. Lors de cette étape 110, l'organe de pilotage 60 commande l'actionnement de l'organe de circulation 42.

L'étape 100 d'injection d'un fluide 52 de prévention de l'effet de peau mince est menée à partir de ou avant l'étape 110 d'actionnement de l'organe de circulation 42, et en continue pendant toute la durée d'actionnement de l'organe de circulation 42.

En variante, le système de circulation 22 comprend un second organe de circulation destiné faire circuler le fluide 52 de prévention de l'effet de peau mince jusqu'à chaque organe d'injection 50. Ce second organe de circulation vient par exemple en renfort de l'organe de circulation 42. Le second organe de circulation est par exemple une pompe et est relié à l'unité de traitement 62 qui commande par exemple son actionnement, son arrêt et son débit.

En variante, le circuit 46 de circulation ne comporte pas de ligne de recirculation 54. Chaque organe d'injection 50 est alors alimenté par un circuit annexe comportant un réservoir de fluide, et le système de circulation 22 comprend un second organe de circulation destiné à faire circuler le fluide jusqu'à chaque organe d'injection 50.

En variante, le filtre 30 ne s'étend pas verticalement mais selon toute orientation qui convient.

En variante, le filtre 30 n'est pas plan mais présente des ondulations. Dans ce cas, le filtre s'étend néanmoins suivant un plan moyen, l'angle formé entre ce plan moyen et l'axe d'injection (A) étant compris entre 0 et 45°, et avantageusement entre 5 et 20°.

En variante, le système de circulation 22 comprend un ou plusieurs autres filtres en supplément du filtre 30. De tels filtres présentent des caractéristiques similaires au filtre 30 décrit précédemment. Les filtres supplémentaires sont alors par exemple disposés dans la zone de collecte 32.

En variante, l'entrée 36 n'est pas aménagée dans la paroi supérieure 26B mais dans les parois latérales 26C.

En variante, le système de circulation est applicable par exemple à d'autres dispositifs du domaine du nucléaire. Par exemple, le système est applicable à la recirculation d'eau dans des piscines d'entreposage d'éléments combustibles, le volume 24 étant alors la piscine d'entreposage.

Le système est applicable à des circuits secondaires et à des circuits de refroidissement de circuits tertiaires, les circuits tertiaires permettant la circulation d'un fluide issu d'une source extérieure d'eau telle qu'un fleuve,

En variante, dans le cas où le réacteur est par exemple de type BWR, le réacteur ne comprend pas de générateur de vapeur. Le circuit 46 de circulation est alors en communication fluidique avec la cuve 16 et permet la circulation du liquide 28 s'accumulant dans la zone de collecte 32 jusqu'à la cuve 16.

L'invention concerne aussi une plateforme navale nucléaire (non représenté) comprenant un réacteur nucléaire comportant une enceinte de confinement délimitée par un fond, une cuve logée dans l'enceinte, un cœur disposé dans la cuve et comportant des assemblages de combustible nucléaire, et un système de circulation tel que décrit précédemment.

Une telle plateforme navale nucléaire est par exemple, un sous-marin nucléaire, un porte-avion nucléaire, ou tout autre engin apte à naviguer en surface ou sous la surface de l'eau et comportant un réacteur nucléaire tel que décrit plus haut.

La solution proposée présente plusieurs avantages comme limiter son impact sur l'aménagement existant et réduire l'encombrement du filtre.

## Revendications

1. Système (22) de circulation d'un liquide d'une installation nucléaire comprenant :
- un volume (24), comportant au moins un filtre (30) divisant le volume (24) en une zone de collecte (32) et une zone d'alimentation (34), et une entrée (36) agencée de telle sorte qu'un liquide (28) chargé en fibres et particules s'accumule dans la zone de collecte (32),
- un organe de circulation (42) ayant une aspiration connectée fluidiquement à la zone d'alimentation (34),
- un circuit (46) de circulation du liquide (28) alimenté par l'organe de circulation (42), et permettant la recirculation d'un flux de liquide s'accumulant dans la zone de collecte (32),
**caractérisé en ce que** le système de circulation comporte un système (48) de prévention de la formation d'une peau mince homogène de fibres et de particules sur un côté (38) du filtre (30) tourné vers la zone de collecte (32),
le système (48) de prévention comprenant au moins un organe d'injection (50) injectant un fluide (52) de prévention de l'effet de peau mince sur au moins une partie du côté (38) du filtre (30) tourné vers la zone de collecte (32),
le système étant configuré pour que le fluide (52) de prévention perturbe la formation d'une peau mince homogène de fibres et de particules sur une partie ou sur l'ensemble du côté (38) du filtre (30),
et **en ce que** le système comporte un organe de pilotage (60) de l'organe de circulation (42) et de l'organe d'injection (50), programmé pour piloter chaque organe d'injection (50) afin de réaliser l'injection du fluide (52) de prévention de l'effet de peau mince en continue, et à partir de ou avant l'actionnement de l'organe de circulation (42).

2. Système (22) selon la revendication 1, dans lequel le circuit (46) de circulation comporte une ligne (54) de recirculation du liquide filtré (40) reliée à chaque organe d'injection (50), le liquide filtré (40) étant le fluide (52) de prévention de l'effet de peau mince.

3. Système (22) selon la revendication 1, comprenant un second organe de circulation destiné à faire circuler le fluide (52) de prévention de l'effet de peau mince jusqu'à chaque organe d'injection (50).

4. Système (22) selon l'une quelconque des revendications précédentes, dans lequel chaque organe d'injection (50) comprend une extrémité (56) placée à une distance comprise entre 1 cm et 10 cm du côté (38) du filtre (30) tourné vers la zone de collecte (32).

5. Système (22) selon l'une quelconque des revendications précédentes, dans lequel chaque organe d'injection (50) est configuré pour injecter le fluide (52) de prévention suivant un axe d'injection (A), l'angle formé entre le côté (38) du filtre (30) tourné vers la zone de collecte (32) et l'axe d'injection (A) étant compris entre 0 et 45°, de préférence entre 5 et 20°.

6. Système (22) selon l'une quelconque des revendications précédentes, dans lequel le fluide (52) de prévention de l'effet de peau mince est injecté à un débit compris entre 10% et 30% du débit nominal de l'organe de circulation (42).

7. Système (22) selon l'une quelconque des revendications précédentes, dans lequel l'aspiration de l'organe de circulation (42) est raccordé fluidiquement à un piquage (44) débouchant dans la zone d'alimentation (34), chaque organe d'injection (50) injectant un fluide (52) de prévention de l'effet de peau mince sur une zone limitée (58) du côté (38) du filtre (30) tourné vers la zone de collecte (32), la zone limitée (58) correspondant à une surface comprise entre 1 et 10 fois la section de passage du piquage (44).

8. Système (22) selon l'une quelconque des revendications précédentes, dans lequel l'installation nucléaire est un réacteur nucléaire (10) comportant une enceinte (12) de confinement délimitée par un fond (14), une cuve (16) logée dans l'enceinte (12), et un cœur (20) disposé dans la cuve (16) comportant des assemblages de combustible nucléaire,
le volume (24) étant situé en fond (14) de l'enceinte (12), l'organe de circulation (42) étant en communication fluidique avec la cuve (16),
le circuit de recirculation du liquide (28) étant agencé pour permettre la circulation d'un flux de liquide s'accumulant dans la zone de collecte (32) jusqu'à la cuve (16).

9. Ensemble d'un liquide (28) chargé en fibres et particules et du système (22) de circulation du liquide (28) selon l'une quelconque des revendications 1 à 8.

10. Centrale nucléaire comprenant un réacteur nucléaire (10) comportant :
- une enceinte (12) de confinement délimitée par un fond (14),
- une cuve (16) logée dans l'enceinte (12),
- un cœur (20) disposé dans la cuve (16) et comportant des assemblages de combustible nucléaire, et
- un système de circulation (22) selon l'une quelconque des revendications 1 à 8.

11. Plateforme navale nucléaire comprenant un réacteur nucléaire (10) comportant :
- une enceinte (12) de confinement délimitée par un fond (14),
- une cuve (16) logée dans l'enceinte (12),
- un cœur (20) disposé dans la cuve (16) et comportant des assemblages de combustible nucléaire, et
- un système de circulation (22) selon l'une quelconque des revendications 1 à 8.

12. Procédé de prévention de formation d'effet de peau mince sur un filtre (30) d'un système de circulation (22) selon l'une quelconque des revendications 1 à 8, comportant une étape d'injection d'un fluide (52) de prévention de l'effet de peau mince sur au moins une partie du côté (38) du filtre (30) tourné vers la zone de collecte (32).

13. Procédé selon la revendication 12, comprenant une étape d'actionnement de l'organe de circulation du système de circulation (42), l'étape d'injection du fluide (52) de prévention de l'effet de peau mince étant menée en continue pendant la durée d'actionnement de l'organe de circulation (42).

## Patentansprüche

1. Zirkulationssystem (22) für eine Flüssigkeit einer Nuklearanlage, umfassend:
- ein Volumen (24), das mindestens einen Filter (30), der das Volumen (24) in eine Sammelzone (32) und eine Versorgungszone (34) aufteilt, und einen Einlass (36) aufweist, der derart angeordnet ist, dass eine mit Fasern und Partikeln beladene Flüssigkeit (28) sich in der Sammelzone (32) sammelt,
- ein Zirkulationselement (42), das eine Absaugung aufweist, die fluidisch mit der Versorgungszone (34) verbunden ist,
- einen Zirkulationskreis (46) für die Flüssigkeit (28), der von dem Zirkulationselement (42) gespeist wird und eine Umwälzung des Flüssigkeitsstroms, der sich in der Sammelzone (32) ansammelt, erlaubt,
**dadurch gekennzeichnet**, das des Zirkulationssystem ein System (48) zum Verhindern der Bildung einer dünnen homogenen Faser- und Partikelschicht auf einer Seite (38) des Filters (30), die zur Sammelzone (32) gerichtet ist, aufweist, wobei
das System (48) zum Verhindern mindestens ein Einspritzelement (50) umfasst, das ein Fluid (52) zum Verhindern der Wirkung der dünnen Schicht auf mindestens einem Teil der Seite (38) des Filters (30), die zu der Sammelzone (32) gerichtet ist, einspritzt,
das System so ausgebildet ist, dass das Fluid (52) zum Verhindern die Bildung einer dünnen homogenen Schicht aus Fasern und Partikeln auf einem Teil oder auf der Gesamtheit der Seite (38) des Filters (30) stört,
und dass das System ein Element (60) zum Steuern des Zirkulationselementes (42) und des Einspritzelementes (50) aufweist, das programmiert ist, jedes Einspritzelement (50) zu steuern, um das Einspritzen des Fluids (52) zum Verhindern der Wirkung der dünnen Schicht kontinuierlich und ab oder vor der Betätigung des Zirkulationselementes (42) durchzuführen.

2. System (22) nach Anspruch 1, bei dem der Zirkulationskreis (46) eine Leitung (54) zur Umwälzung der gefilterte Flüssigkeit (40), die an jedes Einspritzelement (50) angeschlossen ist, aufweist, wobei die gefilterte Flüssigkeit (40) das Fluid (52) zum Verhindern der Wirkung der dünnen Schicht ist.

3. System (22) nach Anspruch 1, ein zweites Zirkulationselement umfassend, das vorgesehen ist, das Fluid (52) zum Verhindern der Wirkung der dünnen Schicht bis zu jedem Einspritzelement (50) zirkulieren zu lassen.

4. System (22) nach einem beliebigen der vorhergehenden Ansprüche, bei dem jedes Einspritzelement (50) ein Ende (56) umfasst, das in einer Entfernung zwischen 1 cm und 10 cm zur Seite (38) des Filters (30), die zu der Sammelzone (32) gerichtet ist, angeordnet ist.

5. System (22) nach einem beliebigen der vorhergehenden Ansprüche bei dem jedes Einspritzelement (50) ausgebildet ist, das Fluid (52) zum Verhindern gemäß einer Einspritzachse (A) einzuspritzen, wobei der Winkel, der zwischen der Seite (38) des Filters (30), die zu der Sammelzone (32) gerichtet ist, und der Einspritzachse (A) gebildet ist, zwischen 0 und 45° vorzugsweise zwischen 5 und 20° ist.

6. System (22) nach einem beliebigen der vorhergehenden Ansprüche, bei dem das Fluid (52) zum Verhindern der Wirkung der dünnen Schicht bei einem Durchfluss zwischen 10 % und 30 % des nominalen Durchflusses des Zirkulationselementes (42) eingespritzt wird.

7. System (22) nach einem beliebigen der vorhergehenden Ansprüche, bei dem die Absaugung des Zirkulationselementes (42) fluidisch an einen Rohranschluss (44) angeschlossen ist, der in die Versorgungzone (34) mündet, wobei jedes Einspritzelement (50) ein Fluid (52) zum Verhindern der Wirkung der dünnen Schicht auf eine begrenzte Zone (51) der Seite (38) des Filters (30), die zu der Sammelzone (32) gerichtet ist, einspritzt, wobei die begrenzte Zone (58) einer Fläche entspricht, die zwischen 1 und 10 mal dem Durchgangsquerschnitt des Rohranschlusses (44) entspricht.

8. System (22) nach einem beliebigen der vorhergehenden Ansprüche, bei der die Nuklearanlage ein Nuklearreaktor (10) ist, der eine von einem Boden (14) begrenzte Sicherheitsumhüllung (12), einen in der Umhüllung (12) aufgenommenen Behälter (16) und einen Kern (20), der in dem Behälter (16) angeordnet ist und Kernbrennstabanordnungen aufweist, umfasst, wobei
das Volumen (24) am Boden (14) der Umhüllung (12) liegt und das Zirkulationselement (42) in fluidischer Verbindung mit dem Behälter (16) ist,
der Kreis zur Umwälzung der Flüssigkeit (28) ausgebildet ist, die Zirkulation eines Flüssigkeitsstroms, der sich in der Sammelzone (32) sammelt, bis zu dem Behälter (16) zuzulassen.

9. Anordnung einer mit Fasern und Partikeln beladene Flüssigkeit und des Zirkulationssystems (22) für die Flüssigkeit (28) nach einem beliebigen der Ansprüche 1 bis 8.

10. Kernkraftwerk mit einem Kernreaktor (10), aufweisend:
- eine Sicherheitsumhüllung (12), die von einem Boden (14) begrenzt ist,
- einen Behälter (16), der in der Umhüllung (12) aufgenommen ist,
- einen Kern (20), der in dem Behälter (16) angeordnet ist und Kernbrennstabanordnungen aufweist, und
- ein Zirkulationssystem (22) nach einem beliebigen der Ansprüche 1 bis 8.

11. Nukleare Schiffsplattform mit einem Kernreaktor (10), aufweisend:
- eine Sicherheitsumhüllung (12), die von einem Boden (14) begrenzt ist,
- einen Behälter (16), der in der Umhüllung (12) aufgenommen ist,
- einen Kern (20), der in dem Behälter (16) angeordnet ist und Kernbrennstabanordnungen aufweist, und
- ein Zirkulationssystem (22) nach einem beliebigen der Ansprüche 1 bis 8.

12. Verfahren zum Verhindern der Bildung der Wirkung einer dünnen Schicht an einem Filter (30) eines Zirkulationssystems (22) nach einem beliebigen der Ansprüche 1 bis 8, das einen Schritt des Einspritzens eines Fluids (52) zum Verhindern der Wirkung einer dünnen Schicht auf mindestens einem Teil einer Seite (38) des Filters (30), die zu der Sammelzone (32) gerichtet ist, umfasst.

13. Verfahren nach Anspruch 12, das einen Schritt der Betätigung des Zirkulationselementes des Zirkulationssystems (42) umfasst, wobei der Schritt des Einspritzens des Fluids (52) zum Verhindern der Wirkung einer dünnen Schicht kontinuierlich während der Dauer der Betätigung des Zirkulationselementes (42) ausgeführt wird.

## Claims

1. System (22) for circulating a liquid of a nuclear facility, comprising:
- a volume (24) having at least one filter (30) which divides the volume (24) into a collection zone (32) and a feed zone (34), and an inlet (36) which is arranged such that a liquid (28) loaded with fibres and particles accumulates in the collection zone (32),
- a circulation member (42) having a suction which is fluidically connected to the feed zone (34),
- a circuit (46) for circulation of the liquid (28) supplied by the circulation member (42) and which allows a flow of liquid which accumulates in the collection zone (32) to be recirculated,
**characterised in that** the circulation system comprises a system (48) for prevention of the formation of a thin homogeneous skin of fibres and particles on a side (38) of the filter (30) that faces the collection zone (32),
the prevention system (48) comprising at least one injection member (50) which injects a fluid (52) for prevention of the thin skin effect onto at least a portion of the side (38) of the filter (30) that faces the collection zone (32),
the system being configured so that the prevention fluid (52) disrupts the formation of a thin homogeneous skin of fibres and particles on a portion or on the entirety of the side (38) of the filter (30),
and **in that** the system comprises a control member (60) for the circulation member (42) and the injection member (50), which control member is programmed to control each injection member (50) in order to continuously perform the injection of the fluid (52) for prevention of the thin skin effect, starting from or prior to actuation of the circulation member (42).

2. System (22) according to claim 1, wherein the circulation circuit (46) comprises a line (54) for recirculation of the filtered liquid (40), which line is connected to each injection member (50), the filtered liquid (40) being the fluid (52) for prevention of the thin skin effect.

3. System (22) according to claim 1, comprising a second circulation member for circulating the fluid (52) for prevention of the thin skin effect to each injection member (50).

4. System (22) according to any one of the preceding claims, wherein each injection member (50) comprises an end (56) which is placed at a distance of between 1 cm and 10 cm from the side (38) of the filter (30) that faces the collection zone (32).

5. System (22) according to any one of the preceding claims, wherein each injection member (50) is configured to inject the prevention fluid (52) along an injection axis (A), the angle formed between the side (38) of the filter (30) that faces the collection zone (32) and the injection axis (A) being between 0 and 45°, preferably between 5 and 20°.

6. System (22) according to any one of the preceding claims, wherein the fluid (52) for prevention of the thin skin effect is injected at a flow rate of between 10% and 30% of the nominal flow rate of the circulation member (42).

7. System (22) according to any one of the preceding claims, wherein the suction of the circulation member (42) is fluidically connected to a connection piece (44) which opens into the feed zone (34), each injection member (50) injecting a fluid (52) for prevention of the thin skin effect onto a limited zone (58) of the side (38) of the filter (30) that faces the collection zone (32), the limited zone (58) corresponding to a surface of between 1 and 10 times the passage cross-section of the connection piece (44).

8. System (22) according to any one of the preceding claims, wherein the nuclear facility is a nuclear reactor (10) having a containment (12) delimited by a base (14), a vessel (16) housed in the containment (12), and a core (20) which is arranged in the vessel (16) and has nuclear fuel assemblies,
the volume (24) being situated at the base (14) of the containment (12), the circulation member (42) being in fluidic communication with the vessel (16),
the circuit for recirculation of the liquid (28) being arranged to allow a flow of liquid which accumulates in the collection zone (32) to be circulated to the vessel (16).

9. Assembly of a liquid (28) loaded with fibres and particles and of the system (22) for circulating the liquid (28) according to any one of claims 1 to 8.

10. Nuclear facility comprising a nuclear reactor (10) having:
- a containment (12) delimited by a base (14),
- a vessel (16) housed in the containment (12),
- a core (20) which is arranged in the vessel (16) and has nuclear fuel assemblies, and
- a circulation system (22) according to any one of claims 1 to 8.

11. Nuclear naval platform comprising a nuclear reactor (10) having:
- a containment (12) delimited by a base (14),
- a vessel (16) housed in the containment (12),
- a core (20) which is arranged in the vessel (16) and has nuclear fuel assemblies, and
- a circulation system (22) according to any one of claims 1 to 8.

12. Method for preventing the formation of a thin skin effect on a filter (30) of a circulation system (22) according to any one of claims 1 to 8, comprising a step of injecting a fluid (52) for prevention of the thin skin effect onto at least a portion of the side (38) of the filter (30) that faces the collection zone (32).

13. Method according to claim 12, comprising a step of actuating the circulation member of the circulation system (42), the step of injecting the fluid (52) for prevention of the thin skin effect being carried out continuously for the duration of actuation of the circulation member (42).
